(19) 

**Europäisches Patentamt**
**European Patent Office**
**Office européen des brevets**

(11) **EP 4 043 236 B1**

(12) **EUROPEAN PATENT SPECIFICATION**

(45) Date of publication and mention
of the grant of the patent:
**29.10.2025 Bulletin 2025/44**

(21) Application number: **20872658.8**

(22) Date of filing: **16.09.2020**

(51) International Patent Classification (IPC):
*B60C 3/04* *(2006.01)*      *B60C 9/00* *(2006.01)*
*B60C 9/08* *(2006.01)*      *B60C 15/04* *(2006.01)*
*B60C 9/20* *(2006.01)*      *B60C 9/22* *(2006.01)*
*B60C 9/26* *(2006.01)*      *B60C 15/00* *(2006.01)*
*B60C 9/04* *(2006.01)*

(52) Cooperative Patent Classification (CPC):
**B60C 3/04; B60C 9/20; B60C 9/2204; B60C 9/26;**
**B60C 15/0027; B60C 15/04;** B60C 2009/045;
B60C 2009/0475; B60C 2009/2016;
B60C 2009/2219; B60C 2009/229; B60C 2015/048

(86) International application number:
**PCT/JP2020/035076**

(87) International publication number:
**WO 2021/065511 (08.04.2021 Gazette 2021/14)**

(54) **PNEUMATIC TIRE**

LUFTREIFEN

PNEUMATIQUE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **04.10.2019 JP 2019183983**

(43) Date of publication of application:
**17.08.2022 Bulletin 2022/33**

(73) Proprietor: **BRIDGESTONE CORPORATION**
**Chuo-ku**
**Tokyo 104-8340 (JP)**

(72) Inventor: **SUZUKI Kohei**
**Chuo-ku, Tokyo, 104-8340 (JP)**

(74) Representative: **Marks & Clerk LLP**
**15 Fetter Lane**
**London EC4A 1BW (GB)**

(56) References cited:
WO-A1-2020/122165      JP-A- 2002 160 510
JP-A- 2002 178 720      JP-A- 2005 343 334
JP-A- 2007 022 138      JP-A- 2008 179 255
JP-A- 2010 253 993      JP-A- 2011 245 967
JP-A- 2013 129 407      JP-A- 2016 513 038
JP-A- 2018 138 435      US-A1- 2001 050 126
US-A1- 2002 017 351      US-A1- 2012 118 467

**Description**

[Technical Field]

The present invention relates to a small-diameter pneumatic tire having improved load-carrying capacity.

[Background Art]

Conventionally, a pneumatic tire with a reduced diameter while increasing the load-carrying capacity (maximum load capacity) is known (see to Patent Literature 1.). According to the pneumatic tire, the space of a small vehicle can be saved and a wide riding space can be secured.

[Prior art documents]

[Patent Literature]

[Patent Literature 1] Japanese Unexamined Patent Application Publication No. 2018 - 138435.
Attention is also drawn to the disclosure of US 2002/017351 A1 and also of the late published document WO 2020/122165 A1.

[Summary of Invention]

In recent years, a new small shuttle buses have been proposed with an emphasis on the transportation of people and goods within city. Such a small shuttle bus has a total length of about 5 meters and a total width of about 2 meters, and the total vehicle weight is assumed to exceed 3 tons. For the pneumatic tire mounted on such a small shuttle bus, space saving is required while providing necessary load-carrying capacity.
A pneumatic tire mounted on such a small shuttle bus is assumed to have a high internal pressure, and sufficient durability against a high internal pressure is required.
However, since the diameter size of the pneumatic tire described above is small, there is a problem that the degree of difficulty of folding back the bead core back via carcass at the time of manufacturing increases. For this reason, it is not easy to use metal carcass cords such as steel having high bending rigidity, and it is not practical considering the manufacturing efficiency.
Accordingly, an object of the present invention is to provide a pneumatic tire which is easy to manufacture while achieving high load-carrying capacity, durability and space saving.
One aspect of the present invention is a pneumatic tire (for example, a pneumatic tire 10) according to claim 1.

[Brief Description of Drawings]

FIG. 1 is an overall schematic side view of a vehicle 1 to which a pneumatic tire 10 is mounted.
FIG. 2 is a cross-sectional view of the pneumatic tire 10 and a rim wheel 100.
FIG. 3 is a cross-sectional view of the pneumatic tire 10.
FIG. 4 is a perspective view of a part of a carcass 40.
FIG. 5 is an enlarged cross-sectional view of a bead portion 60 including a cross-sectional shape of a bead core 61.
FIG. 6 is an enlarged cross-sectional view of the bead portion 60 including dimension ratios of the bead core 61.
FIG. 7 is a plan view of a sole belt layer 50.
FIG. 8 is an enlarged cross-sectional view of part of the belt layer 50.
FIG. 9 is a plan view of a sole belt layer 50 A according to modified example.
FIG. 10 is a cross-sectional view of a pneumatic tire 10 A according to modified example.
FIG. 11 is a cross-sectional view of a pneumatic tire 10 B according to another modified example.

[Description of Embodiments]

Embodiments will be described below with reference to the drawings. It should be noted that the same functions and configurations are denoted by the same or similar reference numerals, and the description thereof is appropriately omitted.

(1) Schematic configuration of a vehicle to which pneumatic tire is mounted

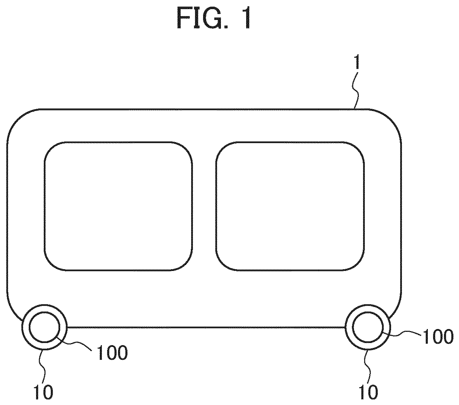

FIG. 1 is an overall schematic side view of a vehicle 1 to which a pneumatic tire 10 according to this embodiment is mounted. As shown in FIG. 1, in this embodiment, the vehicle 1 is a four-wheeled vehicle. The vehicle 1 is not limited to four wheels, and may have a six-wheel configuration or an eight-wheel configuration.

A predetermined number of pneumatic tires 10 are mounted on the vehicle 1 according to the wheel configuration. More specifically, the pneumatic tire 10 assembled to a rim wheel 100 is mounted on the vehicle 1 at a predetermined position.

The vehicle 1 belongs to a new small shuttle bus with an emphasis on transportation of people and goods in the city. In this embodiment, the new small shuttle bus is assumed to be a vehicle having a total length of 4 meters to 7 meters, a total width of about 2 meters, and a total vehicle weight of about 3 tons. However, the size and the gross vehicle weight are not necessarily limited to the range, and may be slightly out of the range.

The small shuttle bus is not necessarily limited to transportation of people, but may be used for transportation of goods, a mobile store, a mobile office, etc.

In addition, small shuttle buses have a relatively low travel speed range (maximum speed: 70 km/h or less, average speed: about 50 km/h) because they are focused on transporting people and goods within the city. Therefore, hydroplaning countermeasures need not be emphasized. However, the small shuttle bus may be used for transportation between cities or the like, and may have a high speed traveling range (for example, a maximum speed of 100 km/h).

In the present embodiment, it is assumed that the vehicle 1 is an electric vehicle having an automatic driving function (assume Level 4 or higher), but the automatic driving function is not essential and the vehicle 1 may not be an electric vehicle.

If the vehicle 1 is an electric vehicle, an in-wheel motor (unillustrated) is preferably used as a power unit. The in-wheel motor may be provided with the whole unit in the inner space of the rim wheel 100 or a part of the unit in the inner space of the rim wheel 100.

If an in-wheel motor is used, the vehicle 1 preferably has an independent steering function in which each wheel can steer independently. This makes it possible to turn and move in the lateral direction on the spot and eliminates the need for a power transmission mechanism, thereby improving the space efficiency of the vehicle 1.

Thus, in the vehicle 1, high space efficiency is required. For this reason, the pneumatic tire 10 preferably has a small diameter as small as possible.

On the other hand, a high load-carrying capacity (maximum load capacity) is required because it is mounted on the vehicle 1 having a gross vehicle weight corresponding to a vehicle size and an application.

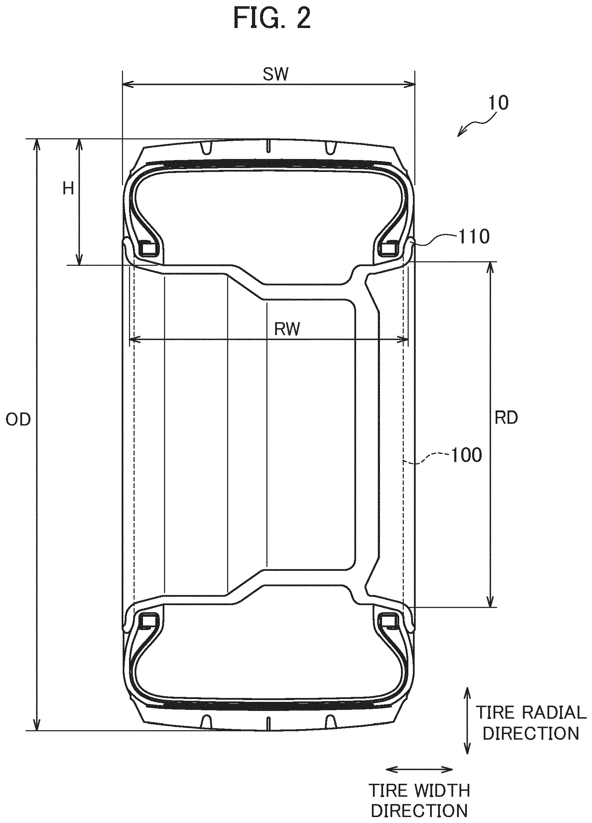

In order to satisfy such requirements, the pneumatic tire 10 has a load-carrying capacity corresponding to the total vehicle weight of the vehicle 1 while reducing the outer diameter OD (not shown in FIG. 1, see FIG. 2).

If the vehicle 1 has an in-wheel motor and an independent steering function, the pneumatic tire 10 is preferably low in aspect ratio from the viewpoint of improving responsiveness, and the rim diameter RD (not shown in FIG. 1, see FIG. 2) of the pneumatic tire 10 is preferably large in consideration of a housing space for an in-wheel motor or the like.

(2)Structure of pneumatic tire

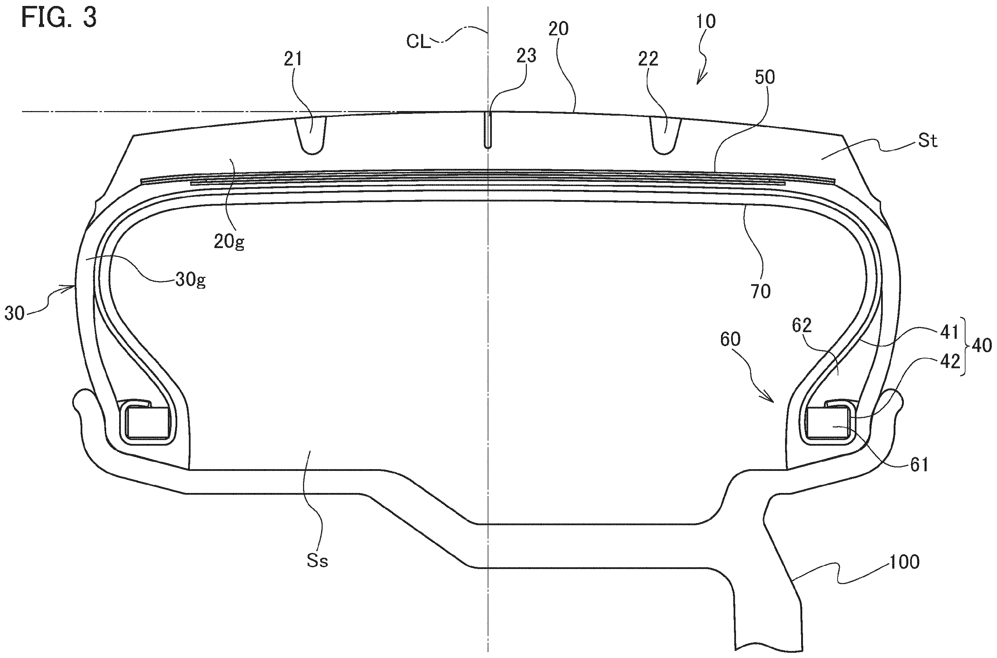

FIG. 2 is a cross-sectional view of the pneumatic tire 10 and the rim wheel 100. Specifically, FIG. 2 is a cross-sectional view along the tire width direction and the tire radial direction of a pneumatic tire 10 assembled to a rim wheel 100. In FIG. 2, the sectional hatching is not shown (the same as FIG. 3 and beyond).

The pneumatic tire 10 has a relatively small diameter while being wide. Specifically, a rim diameter RD which is a diameter of the rim wheel 100, to which the pneumatic tire 10 is assembled is 10 inches or more and 22 inches or less. The rim diameter RD may be 12 inches or more and 17.5 inches or less in consideration of other numerical ranges.

As shown in FIG. 2, the rim diameter RD is the outer diameter of the rim body portion of the rim wheel 100 and does not include the portion of the rim flange 110.

The tire width SW of the pneumatic tire 10 is 125 mm or more and 255 mm or less. As shown in FIG. 2, the tire width SW means the cross-sectional width of the pneumatic tire 10, and if the pneumatic tire 10 includes a rim guard (not shown), the rim guard portion is not included.

The aspect ratio of the pneumatic tire 10 is 40% or more and 75% or less. The Aspect ratio is calculated using expression 1.

Aspect ratio (%) = tire section height H/tire width SW (section width) x 100         (Expression 1)

The outer diameter OD being an outer diameter of the pneumatic tire 10 is 350 mm or more and 600 mm or less. The outer diameter OD is preferably 500 mm or less.

When the tire outer diameter OD is such a size and the rim width RW is defined by the rim width of the rim wheel 100 assembled to the pneumatic tire 10 is, the pneumatic tire 10 satisfies the relationship of (Expression 2) and (Expression 3). The rim width RW is 3.8 inches or more and 8 inches or less.

$$0.78 \leq RW/SW \leq 0.99 \ ... \ \text{(Expression 2)}$$

$$0.56 \leq RD/OD \leq 0.75 \ ... \ \text{(Expression 3)}$$

The pneumatic tire 10 satisfying such a relationship can secure an air volume necessary for supporting the gross vehicle weight of the vehicle 1 even though the diameter is small. Specifically, the air volume is required to be 20,000 cm 3 or more in consideration of the load supporting performance. Also, in consideration of space saving, it is necessary to be 80,000 cm 3 or less.

If the above-mentioned relationship is satisfied, the rim width RW is not particularly limited, but is preferably as wide as possible from the viewpoint of securing the air volume.

Also, from the viewpoint of securing the air volume, it is preferable that the ratio of the rim diameter RD to the outer diameter OD is small, that is, the aspect ratio is high. However, as described above, the aspect ratio is preferably low from the viewpoint of responsiveness, and the rim diameter RD is preferably large in consideration of the housing space of the in-wheel motor or the like, so that the aspect ratio and the rim diameter RD have a trade-off relationship between the air volume and the responsiveness as well as the housing space of the in-wheel motor or the like.

An example of a suitable size for the pneumatic tire 10 is 205/40 R 15. The applicable rim width is about 7.5 J.

Further, although not particularly limited, the designated internal pressure (normal internal pressure) of the pneumatic tire 10 is assumed to be 400 to 1,100 kPa, realistically 500 to 900 kPa. For example, normal internal pressure is the air pressure corresponding to the maximum load capacity in the YearBook of JATMA (Japan Automobile Tire Manufacturers Association) in Japan, ETRTO in Europe, TRA in the U.S., and other tire standards in other countries.

The load borne by the pneumatic tire 10 is assumed to be 500 to 1,500 kgf, and practically, about 900 kgf.

FIG. 3 is a cross-sectional view of the pneumatic tire 10. Specifically, FIG. 3 is a cross-sectional view of the pneumatic tire 10 and the rim wheel 100 along the tire width direction and the tire radial direction.

As shown in FIG. 3, the pneumatic tire 10 includes a tread 20, a tire side portion 30, a carcass 40, a belt layer 50 and a bead portion 60. As shown in FIG. 3, the cross-sectional shape of the pneumatic tire 10 is symmetrical with respect to the tire equatorial line CL.

The tread 20 is a part in contact with the road surface. The tread 20 is formed with a pattern (not shown) according to the use environment of the pneumatic tire 10 and the type of the vehicle to be mounted.

The pattern formed on the tread 20 is not particularly limited, but in the present embodiment, a plurality of circumferential grooves are formed on the tread 20. A width direction groove (lug groove) may be formed on the tread 20.

Specifically, a circumferential main groove 21 and a circumferential main groove 22 are formed, and a circumferential narrow groove 23 having a groove width narrower than the circumferential main groove 21 and the circumferential main groove 22 is formed at the position of tire equatorial line CL.

When a tread rubber 20 g in the vicinity of tire equatorial line CL is bent toward inside in the tire radial direction, both groove walls come into contact with and support each other, so that the circumferential narrow groove 23 can also contribute to suppressing the so-called buckling.

The tire side portion 30 is continuous to the tread 20 and positioned inside in the tire radial direction of the tread 20. The tire side portion 30 is an area from outside end in the tire width direction of the tread 20 to the upper end of the bead portion 60. The tire side portion 30 may be called a side wall or the like.

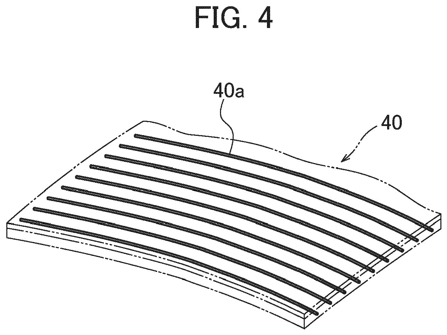

The carcass 40 is an annular member forming a skeleton (tire skeleton) of the pneumatic tire 10. The carcass 40 has a radial structure in which carcass cords 40 a (not shown in FIG. 3, see FIG. 4) arranged radially along the tire radial direction are coated with a rubber material. However, it is not limited to a radial structure, and may be a bias structure in which a carcass cords are arranged so as to cross each other in the tire radial direction.

The carcass 40 comprises a body portion 41 and a folded portion 42. The body portion 41 is provided over the tread 20, the tire side portion 30 and the bead portion 60 until it is folded back at the bead portion 60.

The folded portion 42 is a portion continuous to the body portion 41 and folded back from inside in the tire width direction to outside in the tire width direction via a bead core 61.

The belt layer 50 is provided inside in the tire radial direction of the tread 20. In the present embodiment, the belt layer 50 has a four-belt configuration, but may have a configuration other than a four-belt configuration, for example, a three-belt configuration. Specifically, the belt layer 50 includes a pair of crossing belt intersecting belt cords. The belt layer 50 includes a circumferential belt having a plurality of circumferential cord extending along the tire circumferential direction. The specific configuration of the belt layer 50 will be described later.

The bead portion 60 is continuous to the tire side portion 30 and positioned inside in the tire radial direction of the tire side portion 30. The bead portion 60 is an annular shape extending in the tire circumferential direction, and the carcass 40 is folded back via the bead portion 60 from inside in the tire width direction to outside in the tire width direction.

The bead portion 60 may be provided with a bead filler outside in the tire radial direction of the bead core 61, or may be provided with a chafer for preventing the carcass 40 or the like folded back by the bead portion 60 from being rubbed and worn by the rim wheel 100. In this embodiment, a bead filler 62 is provided.

An inner liner 70 is provided inside in the tire radial direction of the carcass 40. The inner liner 70 prevents leakage of gas such as air filled in the internal space of the pneumatic tire 10 assembled to the rim wheel 100.

In particular, in the present embodiment, in order to more surely prevent leakage of gas such as air filled in the internal space having a high internal pressure, a high-performance member is used for the inner liner 70. Specifically, the inner liner 70 has an A layer made of a resin composition containing a gas barrier resin and a B layer adjacent to the A layer and made of a resin composition containing an elastomer.

The total number of the A layer and the B layer is 7 or more layers. The average thickness of the A layer is not less than 0.001 $\mu$m and not more than 10 $\mu$m, and the average thickness of the B layer is not less than 0.001 $\mu$m and not more than 40 $\mu$m.

The elastomer is preferably at least one kind selected from the group consisting of a polystyrene elastomer, a polyolefin elastomer, a polydiene elastomer, a polyvinyl chloride elastomer, a chlorinated polyethylene elastomer, a polyurethane elastomer, a polyester elastomer, a polyamide elastomer, and a fluororesin elastomer.

The gas barrier resin is preferably an ethylene-vinyl alcohol copolymer.

The layers A and B may be configured as described in, for example, WO 2012/042679.

As shown in FIG. 3, in this embodiment, the tread 20 is made of the tread rubber 20 g. The tread rubber 20 g is composed of a kind of rubber (including a compounding agent) corresponding to the performance required for the tread 20.

The tread rubber 20 g comes into contact with the side rubber 30 g constituting the tire side portion 30 (see the boundary line in the figure).

In the present embodiment, the cross-sectional area St of the tread rubber 20 g along the tire width direction and the tire radial direction, and the cross-sectional area Ss of the internal space along the tire width direction and the tire radial direction of the pneumatic tire 10 assembled to the rim wheel 100 preferably satisfy the following relationship.

$$0.10 \leqq St/Ss \leqq 0.40$$

Preferably, $0.15 \leq St/Ss \leq 0.35$, and more preferably, $0.19 \leq St/Ss \leq 0.29$ are satisfied.

(3) Configuration of carcass 40

FIG. 4 is a perspective view of part of the carcass 40. As shown in FIG. 4, the carcass 40 has a plurality of carcass cords 40 a arranged at intervals. The present embodiment has a radial structure as described above, and the carcass cord 40 a is disposed along the tire width direction.

Specifically, the plurality of carcass cords 40 a arranged along the tire width direction are covered with a rubber material.

The carcass cord 40 a is formed of a predetermined organic fiber. That is, the carcass cord 40 a is formed by twisting a plurality of filament bundles of organic fibers excluding metals such as steel.

Specifically, the carcass cord 40 a is preferably formed of either nylon, polyethylene terephthalate (PET), or aramid. The organic fiber may be referred to as a synthetic fiber or a chemical fiber, or may be a polyester-based synthetic fiber, a polyamide-based synthetic fiber, or the like.

The breaking strength of the carcass cord 40 a formed of such organic fibers is preferably 2.2 kN/cm or more in order to secure the strength required for the pneumatic tire 10. If the breaking strength of 2.2 kN/cm or more can be secured, the specific twist structure of the carcass cord 40 a is not particularly limited.

(4) Bead portion 60 Configuration

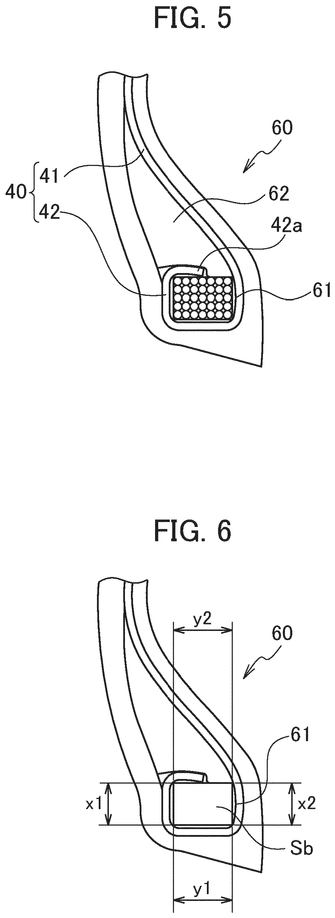

FIGs. 5 and 6 are enlarged cross-sectional views of the bead portion 60. Specifically, FIG. 5 is an enlarged cross-sectional view of the bead portion 60 including a cross-sectional shape of the bead core 61. FIG. 6 is an enlarged cross-sectional view of the bead portion 60 including the dimensional proportions of the bead core 61.

As shown in FIG. 5, the folded portion 42 of the carcass 40 is folded back from inside in the tire width direction to outside in the tire width direction via the bead core 61. The folded portion 42 is provided so as to be wound along the bead core 61. A tip portion 42a of the folded portion 42 wraps around an outside portion in the tire radial direction of the bead core 61. That is, the folded portion 42 is provided so as to be wound along the bead core 61. The structure of the carcass 40 may be referred to as a winded structure.

In this embodiment, the tip portion 42 a is interposed between the bead core 61 and the bead filler 62.

The bead core 61 is formed of a plurality of bead wires 61 a. The bead wire 61 a is preferably made of steel, and the diameter of the bead wire 61 a is preferably 1.26 mm or more. The bead core 61 is a so-called mono-strand bead composed of a single-wire metal wire, and the number of turns of the bead core 61 is preferably 20 or more.

The bead core 61 is formed by annularly winding a single bead wire 61 a while moving in a row direction (tire width direction) and a layer direction (tire radial direction) a plurality of times.

The number of turns means the number of bead wires 61 a constituting the bead core 61, and for example, if it is 20 turns, 5 rows × 4 layers can be applied. In this embodiment, 35 turns (7 rows × 5 layers) are applied.

The bead core 61 having such a turn configuration has a rectangular cross section. However, the cross section of the bead core 61 may be a polygon of a square or larger. That is, the bead core 61 along the tire width direction and the tire radial direction does not have to have a simple arrangement of rows and layers.

Further, as shown in FIG. 6, when the height of outside portion in the tire width direction of the bead core 61 along the tire radial direction is x1, the height of inside portion in the tire width direction of the bead core 61 along the tire radial direction is x2, the width of inside portion in the tire radial direction of the bead core 61 along the tire width direction is y1, and the width of outside portion in the tire radial direction of the bead core 61 along the tire width direction is y2, it is preferable that the following relationships are satisfied:.

$$x1 \geq x2,$$

and

$$y1 \geq y2$$

It is preferable that x1 + y1 $\geq$ 10 mm. Preferably, x1 + y1 $\geq$ 15 mm, more preferably x1 + y1 $\geq$ 20 mm.

Further, the cross-sectional area Sb of the bead core 61 along the tire width direction and the tire radial direction, and the cross-sectional area Ss of the internal space along the tire width direction and the tire radial direction of the pneumatic tire 10 assembled to the rim wheel 100 preferably satisfy the following relationship.

$$4.0 \times 10^{-3} \leq Sb/Ss \leq 9.5 \times 10^{-3}$$

Preferably, $4.5 \times 10^{-3} \leq Sb/Ss \leq 9.0 \times 10^{-3}$, and more preferably, $5.4 \times 10^{-3} \leq Sb/Ss \leq 8.0 \times 10^{-3}$.

(5) Structure of the belt layer 50

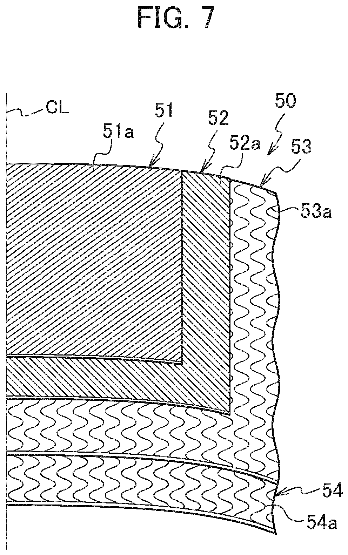

FIG. 7 shows a plan view of the sole belt layer 50. As shown in FIG. 7, the belt layer 50 is configured by a plurality of belts.

Specifically, the belt layer 50 is configured by a pair of crossing belt layers and a pair of circumferential belt layers. The circumferential belt layer is provided inside in the tire radial direction of crossing belt layer.

More specifically, the belt layer 50 includes a crossing belt 51 and a crossing belt 52. The belt layer 50 has a circumferential belt 53 and a circumferential belt 54.

The crossing belt 51 has a belt cord 51 a, and the crossing belt 52 has a belt cord 52 a. The belt cord 51 a and the belt cord 52 a are provided so as to be inclined with respect to the tire width direction and the tire circumferential direction and intersect each other. The belt cords 51 a and the belt cords 52 a may be formed using steel cords as in a general crossing belt layer. The crossing belt 51 (crossing belt 52) is formed by covering the belt cord 51 a (belt cord 52 a) with rubber.

The circumferential belt 53 has a circumferential cord 53 a, and the circumferential belt 54 has a circumferential cord 54 a.

The circumferential belt 53 has a wavy shape in which circumferential cord 53 a repeats amplitude in the tire width direction. Similarly, the circumferential belt 54 has a wavy shape in which circumferential cord 54 a repeats amplitude in the tire width direction.

It should be noted that the circumferential cord 53 a and the circumferential cord 54 a are not linear, but may be provided so as to be regularly or irregularly swung in the tire width direction, and may not necessarily be in the form of a beautiful wave (sine wave).

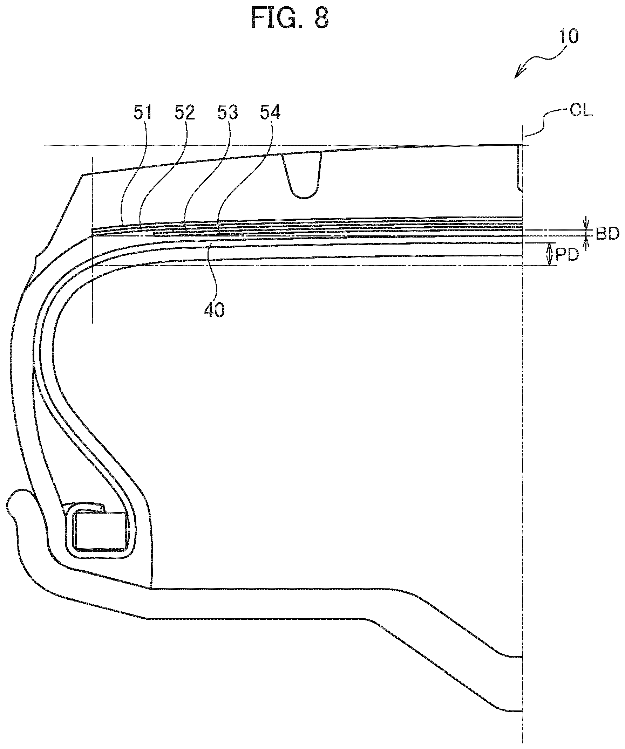

FIG. 8 is an enlarged part cross-sectional view of the belt layer 50. Specifically, FIG. 8 is a sectional view taken along the tire width direction and the tire radial direction of the belt layer 50 on one side with reference to the tire equatorial line CL.

As described above, the belt layer 50 includes the circumferential belt 53 and the circumferential belt 54 having a plurality of circumferential cords along the tire circumferential direction. As shown in FIG. 8, in the present embodiment, the distance PD of the carcass 40 with respect to tire radial direction is longer than the distance BD of the belt layer 50 with respect to tire radial direction.

The distance PD is a distance (length) between tire radial direction inside end of the carcass 40 at the position of the tire equatorial line CL and a position where a straight line passing through the tire radial direction inside end of the carcass 40 in the tire width direction outside end of the belt layer 50 (specifically, the crossing belt 51 and the crossing belt 52) in the tire width direction and parallel to the tire width direction intersects the tire equatorial line CL in the cross section of the pneumatic tire 10 along the tire width direction and the tire radial direction. The distance PD is expressed as the drop height of the carcass 40 in the tire radial direction.

The distance BD is a distance between the tire radial direction inside end of the belt layer 50 (specifically, the circumferential belt 54) at the position of the tire equatorial line CL and a position where a straight line passing through tire radial direction inside end of the belt layer 50 (specifically, the crossing belt 52) at outside end of the belt layer 50 (specifically, the crossing belt 51 and the crossing belt 52) in the tire width direction and parallel to the tire width direction intersects the tire equatorial line CL. The distance BD may be expressed as the drop height of the belt layer 50 in the tire radial direction.

## (6) Modified example

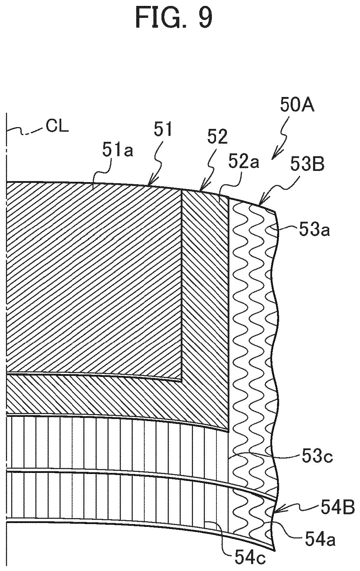

FIG. 9 is a plan view of a sole belt layer 50 A according to modified example. The belt layer 50 A can be applied as a belt layer of the pneumatic tire 10 in place of the belt layer 50 described above. Hereinafter, a part different from the belt layer 50 will be mainly described.

The crossing belt 51 and the crossing belt 52 of the belt layer 50 A are similar to the belt layer 50. On the other hand, a circumferential belt 53 B and a circumferential belt 54 B are formed of two kinds of circumferential cord having different arrangement shapes.

Specifically, the circumferential belt 53 B is formed by a circumferential cord 53 a and a circumferential cord 53 c. The circumferential cord 53 a is similar to the belt layer 50 and has a wave-like shape in which amplitude is repeated in the tire width direction. The circumferential cord 53 c is provided along the tire circumferential direction and has a linear shape having no amplitude in the tire width direction.

Similarly, the circumferential belt 54 B is formed by a circumferential cord 54 a and a circumferential cord 54 c. The circumferential cord 54 a is similar to the belt layer 50 and has a wave-like shape in which amplitude is repeated in the tire width direction. The circumferential cord 54 c is provided along the tire circumferential direction and has a linear shape having no amplitude in the tire width direction.

As shown in FIG. 9, the wavy circumferential cord 53 a and circumferential cord 54 a are provided only at the ends of the belt layer 50 A in the tire width direction. The range of circumferential cord 53 a and circumferential cord 54 a are arranged is not particularly limited, but preferably extends to the vicinity of the ends of the crossing belt 51 and the crossing belt 52 in the tire width direction.

The circumferential belt may be formed by only the linear circumferential cord 53 c and circumferential cord 54 c without the wavy circumferential cord 53 a and circumferential cord 54 a.

In this case, the circumferential cord 53 c and circumferential cord 54 c are preferably formed of a metal cord having a predetermined breaking elongation along the tire circumferential direction. Specifically, the circumferential cord 53 c and the circumferential cord 54 c are preferably formed of a steel cord having high elongation (i.e., high elongation to break), a so-called high-elongation cord.

Alternatively, the circumferential cord 53 c and the circumferential cord 54 c may be formed of aramid fibers.

## (7) Function and effects

According to the pneumatic tire 10, the following effects can be obtained. The pneumatic tire 10 can be used for a new small shuttle bus mainly for transporting people and goods in a city, as in the vehicle 1 described above.

Specifically, the outer diameter OD of the pneumatic tire 10 is 350 mm or more and 600 mm or less, and the tire width SW is 125 mm or more and 255 mm or less. The aspect ratio of the pneumatic tire 10 is 40% or more and 75% or less.

The rim diameter RD of the rim wheel 100 assembled to the pneumatic tire 10 is 10 inches or more and 22 inches or less, and the rim width RW is 3.8 inches or more and 8 inches or less.

The pneumatic tire 10 having such a size further satisfies the following relationship.

$$0.78 \leq RW/SW \leq 0.99,$$

and

$$0.56 \leq RD/OD \leq 0.75$$

Therefore, the diameter is sufficiently small compared with the size of the vehicle 1, and it can contribute to space saving of the vehicle 1.

Further, according to the pneumatic tire 10, since the relation of $0.78 \leq RW/SW \leq 0.99$ is satisfied, the rim width RW relative to the tire width SW is wide, that is, a wide tire can be configured, and an air volume necessary for exhibiting a high load-carrying capacity can be easily secured. If the rim width RW is excessively increased, the tire width SW is also increased, the space efficiency is decreased, and the bead portion 60 is easily detached from the rim wheel 100.

Further, according to the pneumatic tire 10, since the relation of $0.56 \leq RD/OD \leq 0.75$ is satisfied, the rim diameter RD relative to the outer diameter OD is large, and the housing space of the in-wheel motor or the like is easily secured. If the rim diameter RD becomes too small, the diameter size of the disc brake or the drum brake becomes small. Therefore, the effective contact area of the brake becomes small, and it becomes difficult to secure necessary braking performance.

That is, according to the pneumatic tire 10, when it is mounted on a new small shuttle bus or the like, a high space efficiency can be achieved while having a higher load-carrying capacity.

Since the rim diameter RD of the pneumatic tire 10 is 10 inches or more and 22 inches or less, a necessary and sufficient air volume and a housing space for an in-wheel motor or the like can be secured while maintaining a small diameter. Further, braking performance and traction performance can be ensured.

Further, since the tire width SW of the pneumatic tire 10 is 125 mm or more and 255 mm or less and aspect ratio of the pneumatic tire 10 is 40% or more and 75% or less, a necessary and sufficient air volume and a housing space for an in-wheel motor or the like can be secured.

In the present embodiment, the carcass cord 40 a is formed of a predetermined organic fiber such as nylon, polyethylene terephthalate (PET), or aramid, and the breaking strength of the carcass cord 40 a can be 2.2 kN/cm or more.

Since an organic fiber other than a metal is used for the carcass cord 40 a, even in the case of the pneumatic tire 10 having a small diameter size, it is possible to avoid the problem of increasing the level of difficulty for the work of folding the carcass 40 back to via the bead core 61 at the time of manufacturing. In addition, by setting the breaking strength of the carcass cord 40 a to 2.2 kN/cm or more, a high load-carrying capacity and durability required when the pneumatic tire 10 is mounted on a small shuttle bus or the like can be ensured. That is, the pneumatic tire 10 is easy to manufacture while achieving high load-carrying capacity, durability and space saving.

In this embodiment, the number of turns of the bead core 61 can be 20 or more. The diameter of the bead wire 61 a may be 1.26 mm or more. Therefore, while the carcass cord 40 a made of organic fiber is used, the durability of the bead portion 60 required when the pneumatic tire 10 is mounted on a small shuttle bus or the like can be effectively enhanced.

In this embodiment, the tip portion 42 a of the carcass 40 (folded portion 42) is wound around the outside portion in the tire radial direction of the bead core 61. For this reason, it is possible to more surely prevent the so-called ply-out, in which the carcass cord 40 a is pulled out by a high load or a high internal pressure. That is, according to the pneumatic tire 10, the durability of the carcass can be particularly enhanced while achieving high load-carrying capacity, durability and space saving.

In this embodiment, as shown in FIG. 6, the bead core 61 satisfies the relationship $x1 \geq x2$ and $y1 \geq y2$. It is preferable that $x1 + y1 \geq 10$ mm.

Therefore, the tire width direction outside portion of the bead core 61 is longer than the tire width direction inside portion, and the tire radial direction inside portion is longer than the tire radial direction outside portion. This makes it difficult for the folded portion 42 to come off, and it is possible to further surely prevent the ply out.

In the present embodiment, the cross-sectional area Sb of the bead core 61 preferably satisfies the relation of $4.0 \times 10^{-3} \leq Sb/Ss \leq 9.5 \times 10^{-3}$. Therefore, sufficient durability can be ensured in consideration of the high internal pressure, specifically, the air volume of the internal space of the pneumatic tire 10 which can be set to 400 kPa to 1100 kPa.

In this embodiment, the inner liner 70 has a layer A made of a resin composition containing a gas barrier resin and a layer B made of a resin composition containing an elastomer adjacent to the layer A. The number of the A layer and the B layer is 7 or more layers. The average thickness of the A layer is 0.001 $\mu$m or more and 10 $\mu$m or less, and the average thickness of the B layer is 0.001 $\mu$m or more and 40 $\mu$m or less.

Since the gas barrier resin has low air permeability, the reduction of the internal pressure can be more surely prevented even in the case of the pneumatic tire 10 set at a high internal pressure. This can greatly reduce the work related to internal pressure management such as regular inspection and air replenishment. That is, the pneumatic tire 10 can greatly reduce the work related to internal pressure management while achieving high load-carrying capacity and space saving.

In the present embodiment, the elastomer of the B layer is at least one kind selected from the group consisting of a polystyrene elastomer, a polyolefin elastomer, a polydiene elastomer, a polyvinyl chloride elastomer, a chlorinated polyethylene elastomer, a polyurethane elastomer, a polyester elastomer, a polyamide elastomer, and a fluororesin elastomer. The gas barrier resin is an ethylene-vinyl alcohol copolymer. Thus, since the permeability of the air can be increased, the work related to the internal pressure management can be further reduced.

In the present embodiment, the cross-sectional area St of the tread rubber 20 g preferably satisfies the relation of $0.10 \leq St/Ss \leq 0.40$. Therefore, the natural lowering rate of the internal pressure in consideration of the air volume of the internal space of the pneumatic tire 10 which can be set to a high internal pressure and the amount of gas leaking to the outside of via the tread rubber 20 g can be sufficiently reduced.

In this embodiment, as shown in FIG. 8, the distance PD is larger than the distance BD. This state is the same in a state in which the internal pressure of the pneumatic tire 10 assembled to the rim wheel 100 is adjusted to the designated internal pressure (no load is applied) and in a state in which a load is applied (shown by imaginary line along the tread surface in FIG. 8).

Therefore, the belt layer has a small diameter and a low aspect ratio, and in particular, the growth (expansion of the diameter) in tire radial direction at the time of loading the end portion in the tire width direction of the belt layer 50 can be effectively suppressed. Specifically, since the relation of the distance PD > the distance BD is obtained, a space is consequently formed between the carcass 40 and the belt layer 50 at the end of the belt layer 50 in the tire width direction, and the movement (distortion) of the belt layer 50 together with the carcass 40 can be absorbed by using the space. That is, when a load is applied to the pneumatic tire 10, distortion at the end portion of the belt layer 50 in the tire width direction can be greatly reduced.

That is, according to the pneumatic tire 10, failure such as separation of the belt layer 50 can be prevented while achieving high load-carrying capacity and space saving.

In the present embodiment, the circumferential belt 53 (circumferential belt 54) has a wavy shape in which the circumferential cord 53 a (circumferential cord 54 a) repeats amplitude in the tire width direction. Therefore, since the circumferential belt 53 has a constant elongation ratio in the tire circumferential direction, especially, diameter growth of the end portion of the circumferential belt 53 in the tire width direction can be effectively suppressed, and the distortion at the end portion of the circumferential belt 53 in the tire width direction can be greatly reduced.

Also, as shown in modified example of FIG. 9, the circumferential cord 53 c (circumferential cord 54 c) may be formed of aramid fiber or a high elongation cord (steel cord). According to the circumferential cord, diameter growth at the end portion of the belt layer 50 in the tire width direction can be effectively suppressed without being necessarily wavy.

Further, from this viewpoint, the circumferential cord (wavy, high-elongation cord or aramid fiber) may be provided only at the end portion of the belt layer 50 in the tire width direction. Thus, the central portion of the belt layer 50 in the tire width direction has a general structure, and diameter growth at the end portion in the tire width direction of the belt layer 50 can be effectively suppressed.

(8) Other Embodiments

Although the contents of the present invention have been described with reference to the embodiments described above, it is obvious to those skilled in the art that the present invention is not limited to these descriptions and that various modifications and improvements are possible.

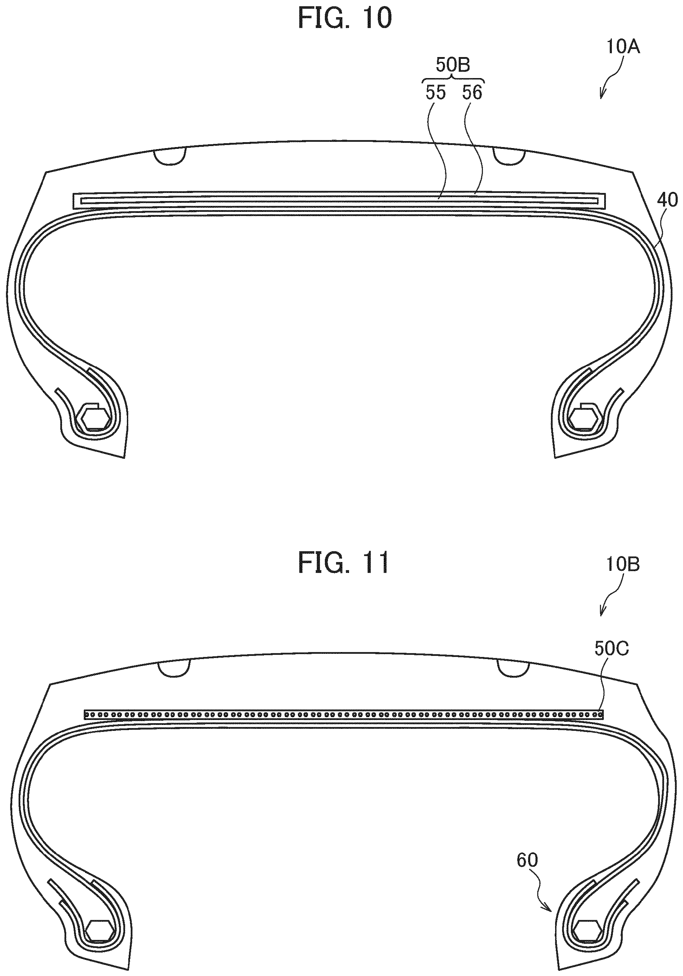

For example, the configuration of the pneumatic tire 10 may be changed as follows. FIG. 10 is a cross-sectional view of a pneumatic tire 10 A according to modified example.

As shown in FIG. 10, the pneumatic tire 10 A includes a belt layer 50 B. The belt layer 50 B is formed by a core belt 55 and a sheath belt 56.

The core belt 55 is a belt in which a cord (not shown) inclined at a low angle with respect to the tire width direction is rubber-coated. The sheath belt 56 is a tape-like belt including a cord, and is wound around the whole circumference of the crossing belt 51. The belt layer 50 B provides the same function as the crossing belt layer.

A specific configuration of the sheath belt 56 is described, for example, in Japanese Unexamined Patent Application Publication No. 2016-215943.

FIG. 11 is a cross-sectional view of a pneumatic tire 10 B according to another modified example. As shown in FIG. 11, the pneumatic tire 10 B includes a belt layer 50 C. The belt layer 50 C is a spiral belt formed by winding a resin-coated cord coated with a resin material along the tire circumferential direction. The belt layer 50 C also provides the same function as the crossing belt layer.

Also, as with the pneumatic tire 10 B, the bead portion 60 may be a conventional structure extending to the tire radial direction outside rather than a winded structure having a tip portion wound around the bead core.

As noted above, although embodiments of the present invention have been described, it should not be understood that part and drawings of the disclosure are intended to limit the invention. Various alternative embodiments, embodiments, and operational techniques will be apparent to those skilled in the art from this disclosure, the invention being limited to the scope defined by the claims.

[Reference Signs List]

1 Vehicle
10, 10 A, 10 B Pneumatic tires
20 Tread
20 g Tread rubber
21, 22 Circumferential main grooves
23 Circumferential narrow groove
30 Tire side portion
30 g side rubber
40 Carcass
40 a Carcass cord
41 Body portion
42 Folded portion
42 a Tip portion
50, 50 A, 50 B, 50 C Belt layer
51, 52 crossing belt
51 a, 52 a Belt cord
53, 53 B, 54, 54 B Circumferential belts
53 a, 53 c, 54 a, 54 c Circumferential cord
55 Core belt
56 Sheath belt
60 Bead portion
61 Bead core
61 a Bead wire
62 Bead filler
70 Inner liner
100 Rim wheel
110 Rim flange

**Claims**

1. A pneumatic tire (10) comprising an annular carcass (40) forming a tire skeleton and mounted on a vehicle;

   a tire side portion (30) continuous to a tread (20) in contact with a road surface and positioned inside in a tire radial direction of the tread (20);
   a belt layer (50) provided inside in the tire radial direction of the tread (20); and
   a bead portion (60) continuous to the tire side portion and positioned inside in the tire radial direction of the tire side portion,

   wherein

   an outer diameter OD of the pneumatic tire (10) is 350 mm or more and 600 mm or less;
   a tire width SW of the pneumatic tire (10) is 125 mm or more and 255 mm or less;
   an aspect ratio of the pneumatic tire (10) is 40% or more and 75% or less;
   a rim diameter RD of a rim wheel (100) to be assembled to the pneumatic tire (10) is 10 inches or more and 22 inches or less;
   the rim width RW of the rim wheel (100) is 3.8 inches or more and 8 inches or less, and
   relations of:

$$0.78 \leq \mathrm{RW/SW} \leq 0.99;$$

   and

$$0.56 \leq \mathrm{RD/OD} \leq 0.75$$

are satisfied, wherein

the carcass (40) has a plurality of carcass cords (40a) disposed at intervals,
the carcass cord (40a) is formed of a predetermined organic fiber, wherein
the bead portion (60) has an annular bead core (61),
the bead core (61) is formed of a plurality of bead wires (61a), and
the number of turns of the bead core (60) is 20 or more,

wherein

a folded portion (42) of the carcass (40) is folded back from inside in the tire width direction to outside in the tire width direction via the bead core (61),
a tip portion (42a) of the folded portion (42) wraps around an outside portion in the tire radial direction of the bead core (61),
a drop height of the carcass (40) with respect to tire radial direction is longer than a drop height of the belt layer (50) with respect to tire radial direction,
wherein the drop height of the carcass (40) in the tire radial direction is a distance (PD) between tire radial direction inside end of the carcass (40) at a position of a tire equatorial line (CL) and a position where a straight line passing through the tire radial direction inside end of the carcass (40) in a tire width direction outside end of the belt layer (50) in the tire width direction and parallel to the tire width direction intersects the tire equatorial line (CL) in a cross section of the pneumatic tire (10) along the tire width direction and the tire radial direction;
a cross section of the bead core (61) along the tire width direction and the tire radial direction is a rectangular shape,
when a height of outside portion in the tire width direction of the bead core (61) along the tire radial direction is x1, a height of inside portion in the tire width direction of the bead core (61) along the tire radial direction is x2, a width of inside portion in the tire radial direction of the bead core (61) along the tire width direction is y1, and a width of outside portion in the tire radial direction of the bead core (61) along the tire width direction is y2,

$$x1 \geq x2,$$

$$y1 \geq y2$$

and

$$x1 + y1 \geq 10 \ \mathrm{mm}$$

are satisfied, and
a cross-sectional area Sb of the bead core (61) along the tire width direction and the tire radial direction, and a cross-sectional area Ss of the internal space along the tire width direction and the tire radial direction of the pneumatic tire (10) assembled to the rim wheel (100) satisfies $4.0 \times 10^{-3} \leq Sb/Ss \leq 9.5 \times 10^{-3}$.

**2.** The pneumatic tire (10) according to claim 1, wherein the bead wire (61a) has a diameter of 1.26 mm or more.


**Patentansprüche**

**1.** Luftreifen (10), umfassend eine ringförmige Karkasse (40), die ein Reifenskelett bildet, und der an einem Fahrzeug montiert ist,

einen Reifenseitenabschnitt (30), durchgehend zu einer Lauffläche (20) in Berührung mit einer Straßenoberfläche und in einer Reifenradialrichtung der Lauffläche (20) innen positioniert,
eine Gürtellage (50), die in der Reifenradialrichtung der Lauffläche (20) innen bereitgestellt wird, und
einen Wulstabschnitt (60), durchgehend zu dem Reifenseitenabschnitt und in der Reifenradialrichtung des Reifenseitenabschnitts innen positioniert, wobei

ein Außendurchmesser OD des Luftreifens (10) 350 mm oder mehr und 600 mm oder weniger beträgt, eine Reifenbreite SW des Luftreifens (10) 125 mm oder mehr und 255 mm oder weniger beträgt, ein Seitenverhältnis des Luftreifens (10) 40 % oder mehr und 75 % oder weniger beträgt, ein Felgendurchmesser RD eines Felgenrades (100), das an dem Luftreifen (10) montiert werden soll, 10 Zoll oder mehr und 22 Zoll oder weniger beträgt, die Felgenbreite RW des Felgenrades (100) 3,8 Zoll oder mehr und 8 Zoll oder weniger beträgt und Verhältnisse von:

$$0{,}78 \leq RW/SW \leq 0{,}99$$

und

$$0{,}56 \leq RD/OD \leq 0{,}75$$

erfüllt sind, wobei
die Karkasse (40) eine Vielzahl von Karkassenkords (40a) aufweist, die in Abständen angeordnet sind, der Karkassenkord (40a) aus einer vorbestimmten organischen Faser hergestellt ist, wobei der Wulstabschnitt (60) einen ringförmigen Wulstkern (61) aufweist, der Wulstkern (61) aus einer Vielzahl von Wulstdrähten (61a) geformt ist und die Anzahl von Umdrehungen des Wulstkerns (60) 20 oder mehr beträgt, wobei ein umgeklappter Abschnitt (42) der Karkasse (40) von der Innenseite in der Reifenbreitenrichtung zu der Außenseite in der Reifenbreitenrichtung über den Wulstkern (61) zurückgeklappt ist, sich ein Spitzenabschnitt (42a) des umgeklappten Abschnitts (42) um einen in der Reifenradialrichtung äußeren Abschnitt des Wulstkerns (61) wickelt, eine Fallhöhe der Karkasse (40) in Bezug auf die Reifenradialrichtung länger ist als eine Fallhöhe der Gürtellage (50) in Bezug auf die Reifenradialrichtung, wobei die Fallhöhe der Karkasse (40) in der Reifenradialrichtung eine Entfernung (PD) zwischen einem in Reifenradialrichtung inneren Ende der Karkasse (40) an einer Position einer Reifenäquatoriallinie (CL) und einer Position, wo eine gerade Linie, die durch das in Reifenradialrichtung innere Ende der Karkasse (40), das in einer Reifenbreitenrichtung äußere Ende der Gürtellage (50) in der Reifenbreitenrichtung und parallel zu der Reifenbreitenrichtung hindurchgeht, die Reifenäquatoriallinie (CL) in einem Querschnitt des Luftreifens (10) entlang der Reifenbreitenrichtung und der Reifenradialrichtung schneidet, ist, ein Querschnitt des Wulstkerns (61) entlang der Reifenbreitenrichtung und der Reifenradialrichtung eine rechteckige Form ist, wenn eine Höhe eines in der Reifenbreitenrichtung äußeren Abschnitts des Wulstkerns (61) entlang der Reifenradialrichtung x1 ist, eine Höhe eines in der Reifenbreitenrichtung inneren Abschnitts des Wulstkerns (61) entlang der Reifenradialrichtung x2 ist, eine Breite eines in der Reifenradialrichtung inneren Abschnitts des Wulstkerns (61) entlang der Reifenbreitenrichtung y1 ist und eine Breite eines in der Reifenradialrichtung äußeren Abschnitts des Wulstkerns (61) entlang der Reifenbreitenrichtung y2 ist,

$$x1 \geq x2,$$

$$y1 \geq y2 \text{ und}$$

$$x1 + y1 \geq 10 \text{ mm}$$

erfüllt sind und
eine Querschnittsfläche Sb des Wulstkerns (61) entlang der Reifenbreitenrichtung und der Reifenradialrichtung und eine Querschnittsfläche Ss des inneren Raums des an dem Felgenrad (100) montierten Luftreifens (10) entlang der Reifenbreitenrichtung und der Reifenradialrichtung $4{,}0 \times 10^{-3} \leq Sb/Ss \leq 9{,}5 \times 10^{-3}$ erfüllt.

2. Luftreifen (10) nach Anspruch 1, wobei der Wulstdraht (61a) einen Durchmesser von 1,26 mm oder mehr aufweist.

**Revendications**

1. Pneumatique (10), comprenant une carcasse annulaire (40) formant un squelette de pneumatique et monté sur un véhicule ;

   une partie latérale de pneumatique (30) continue par rapport à une bande de roulement (20) en contact avec la surface d'une route et positionnée à l'intérieur, dans une direction radiale du pneumatique, de la bande de roulement (20) ;
   une couche de ceinture (50) disposée à l'intérieur, dans la direction radiale du pneumatique, de la bande de roulement (20) ; et
   une partie de talon (60) continue par rapport à la partie latérale du pneumatique et positionnée à l'intérieur, dans la direction radiale du pneumatique, de la partie latérale du pneumatique ;
   dans lequel :

   un diamètre extérieur OD du pneumatique (10) correspond à 350 mm ou plus et à 600 mm ou moins ;
   une largeur de pneumatique SW du pneumatique (10) correspond à 125 mm ou plus et à 255 mm ou moins ;
   un rapport d'aspect du pneumatique (10) correspond à 40% ou plus et à 75% ou moins ;
   un diamètre de jante RD d'une roue à jante (100) à assembler sur le pneumatique (10) correspond à 10 pouces ou plus et à 22 pouces ou moins ;
   la largeur de jante RW de la roue à jante (100) correspond à 3,8 pouces ou plus et à 8 pouces ou moins ; et
   les relations de :

   $$0{,}78 \leq RW/SW \leq 0{,}99 ;$$

   et

   $$0{,}56 \leq RD/OD \leq 0{,}75$$

   sont satisfaites, dans lequel :

   la carcasse (40) comporte une pluralité de câblés de carcasse (40a) disposés à des intervalles ;
   le câblé de carcasse (40a) est formé à partir d'une fibre organique prédéterminée ;

   dans lequel :

   la partie de talon (60) comporte une tringle annulaire (61) ;
   la tringle (61) est formée à partir d'une pluralité de fils d'acier de tringle (61a) ;
   et
   le nombre de tours de la tringle (60) correspond à 20 ou plus ;
   dans lequel :

   une partie pliée (42) de la carcasse (40) est repliée vers l'arrière à partir de l'intérieur, dans la direction de la largeur du pneumatique, vers l'extérieur, dans la direction de la largeur du pneumatique, via la tringle (61) ;
   une partie de pointe (42a) de la partie pliée (42) est enroulée autour d'une partie extérieure, dans la direction radiale du pneumatique, de la tringle (61) ;
   une hauteur de chute de la carcasse (40) par rapport à la direction radiale du pneumatique, est plus longue qu'une hauteur de chute de la couche de ceinture (50) par rapport à la direction radiale du pneumatique ;
   dans lequel la hauteur de chute de la carcasse (40), dans la direction radiale du pneumatique, est une distance (PD) entre l'extrémité intérieure, dans la direction radiale du pneumatique, de la carcasse (40), au niveau d'une position d'une ligne équatoriale du pneumatique (CL) et une position où une ligne droite passant à travers l'extrémité intérieure, dans la direction radiale du pneumatique, de la carcasse (40), dans une extrémité extérieure, dans une direction de la largeur du pneumatique, de la couche de ceinture (50), dans la direction de la largeur du pneumatique et parallèle à la direction de la largeur du pneumatique, coupe la ligne équatoriale du pneumatique (CL) dans une section transversale du pneumatique (10), le long de la direction de la largeur du pneumatique et de la direction radiale du pneumatique ;
   une section transversale de la tringle (61), le long de la direction de la largeur du pneumatique et de la direction radiale du pneumatique, est une forme rectangulaire ;

lorsqu'une hauteur de la partie extérieure, dans la direction de la largeur du pneumatique, de la tringle (61), le long de la direction radiale du pneumatique, correspond à x1, une hauteur de la partie intérieure, dans la direction de la largeur du pneumatique, de la tringle (61), le long de la direction radiale du pneumatique, correspondant à x2, une largeur de la partie intérieure, dans la direction radiale du pneumatique, de la tringle (61), le long de la direction de la largeur du pneumatique, correspondant à y1, et une largeur de la partie extérieure, dans la direction radiale du pneumatique, de la tringle (61), le long de la direction de la largeur du pneumatique, correspondant à y2,

les relations de

$$x1 \geq x2,$$

$$y1 \geq y2,$$

et

$$x1 + y1 \geq 10 \text{ mm}$$

sont satisfaites ; et

une aire de section transversale Sb de la tringle (61), le long de la direction de la largeur du pneumatique et de la direction radiale du pneumatique et une aire de section transversale Ss de l'espace interne, le long de la direction de la largeur du pneumatique et de la direction radiale du pneumatique (10) assemblé sur la roue à jante (100) satisfont la relation de $4,0 \times 10^{+3} < Sb/Ss < 9,5 \times 10^{+3}$ .

2. Pneumatique (10) selon la revendication 1, dans lequel le fil d'acier de tringle (61a) a un diamètre de 1,26 mm ou plus.

FIG. 1

# FIG. 2

FIG. 3

EP 4 043 236 B1

FIG. 4

# FIG. 5

# FIG. 6

FIG. 7

# FIG. 8

# FIG. 9

EP 4 043 236 B1

# FIG. 10

# FIG. 11

23

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018138435 A
- US 2002017351 A1
- WO 2020122165 A1
- WO 2012042679 A
- JP 2016215943 A